# EUROPÄISCHE PATENTSCHRIFT

(11) **EP 1 742 810 B1**
(45) Veröffentlichungstag und Bekanntmachung des Hinweises auf die Patenterteilung: **23.09.2009**
(21) Anmeldenummer: 05739873.7
(22) Anmeldetag: 18.04.2005
(51) Int. Cl.: B60H 1/00

(54) **HEIZ- ODER KLIMAANLAGE FÜR EIN FAHRZEUG**
HEATER OR AIR CONDITIONER FOR A VEHICLE
SYSTEME DE CHAUFFAGE OU DE CLIMATISATION POUR VEHICULE

(30) Priorität: 23.04.2004 DE 102004020415
(43) Veröffentlichungstag der Anmeldung: 17.01.2007
(73) Patentinhaber: Behr GmbH & Co. KG, 70469 Stuttgart (DE)
(72) Erfinder: BLÄSI, Rainer, 73207 Plochingen (DE); BOPP, Alexander, 75428 Illingen (DE); DIEKSANDER, Wolfgang, 71711 Steinheim/Murr (DE); SCHAUDT, Alexander, 78532 Tuttlingen (DE); WAWZYNIAK, Markus, Rochester Hills, MI 48309 (US); SCHAAKE, Norman, 37075 Göttingen (DE)
(86) Internationale Anmeldenummer: PCT/EP2005/004072
(87) Internationale Veröffentlichungsnummer: WO 2005/102747

(56) Entgegenhaltungen:
- DE-A1- 3 911 616
- DE-A1- 4 013 043
- DE-A1- 10 101 551
- DE-A1- 10 241 460
- FR-A- 2 836 420

## Beschreibung

Die Erfindung betrifft eine Heiz- oder Klimaanlage für ein Fahrzeug gemäß dem Oberbegriff des Anspruchs 1.

Zum Bereitstellen von temperierter Luft an einer Mehrzahl von Luftauslässen in den Fahrzeuginnenraum sind Luftmisch- und -verteilervorrichtungen mit Luftkanälen bekannt, welche üblicherweise einen zentralen Mischraum aufweisen, welchem Warm- und Kaltluft zugeführt wird und von dem aus Kanäle zu den Ausströmern, die die temperierte Luft dem Fahrzeuginnenraum zuführen, abzweigen.

Eine derartige Heiz- oder Klimaanlage lässt daher noch Wünsche, insbesondere in Hinblick auf die maximal einstellbare Temperatur, offen.

Document DE-A-4 013 043 offenbart ein Heiz-oder klinaanlage gemäß dem Oberbegriff des Anspruchs 1.

Es ist Aufgabe der Erfindung, eine verbesserte Heiz- oder Klimaanlage zur Verfügung zu stellen.

Diese Aufgabe wird gelöst durch eine Heiz- oder Klimaanlage mit den Merkmalen des Anspruchs 1. Vorteilhafte Ausgestaltungen sind Gegenstand der Unteransprüche.

Erfindungsgemäß ist eine Heiz- oder Klimaanlage vorgesehen, die zwei Mischbereiche aufweist, welche in Luftströmungsrichtung gesehen nacheinander angeordnet sind, wobei dem zweiten Mischbereich, den ersten Mischbereich umgehend, über einen Kanal kalte und/oder warme Luft zugeführt werden kann. Dies ermöglicht eine optimierte Temperierung der Luft, insbesondere ist eine Schichtung möglich.

Der den ersten Mischbereich umgehende, dem zweiten Mischbereich zugeführte Kanal zweigt bevorzugt von einem der Kanäle, vorzugsweise einem Kaltluftkanal, ab, die dem ersten Mischbereich zugeführt werden.

Der den ersten Mischbereich umgehende Kanal verzweigt sich vorzugsweise in mindestens zwei Kanäle, welche bevorzugt unterschiedlichen zweiten Mischbereichen zugeführt werden, z.B. einem der Fahrerseite und einem der Beifahrerseite oder einem dem Frontbereich und einem dem Fondbereich zugeordneten zweiten Mischbereich.

Zu einem Druckausgleich und zur Steigerung der maximal verfügbaren Luftmenge ist bevorzugt zwischen dem Kaltluftkanal und dem Warmluftkanal eine Ausgleichsklappe angeordnet, bevorzugt vor mindestens einem Gebläse.

Der zweite Mischbereich ist bevorzugt nach mindestens einem Gebläse angeordnet, wobei das Gebläse bevorzugt Teil des ersten Mischraums sein oder diesen bilden kann.

Vorzugsweise ist eine Mehrzahl von Regelvorrichtungen zur Regelung der Luftzufuhr zu den Mischbereichen vorgesehen, die bevorzugt durch Klappen gebildet sind, jedoch sind auch andere, den Luftstrom regelnde Elemente möglich. Die Steuerung erfolgt bevorzugt zentral, wobei auch einzelne Regelvorrichtungen über einen gemeinsamen Stellantrieb geregelt werden können.

Im Folgenden wird die Erfindung anhand von mehreren Ausführungsbeispielen, teilweise mit Varianten, unter Bezugnahme auf die Zeichnung im Einzelnen erläutert. In der Zeichnung zeigen:
- Fig. 1: eine schematische Ansicht eines Teilbereichs des Belüftungs- systems einer Kraftfahrzeug-Klimaanlage gemäß dem ersten Ausführungsbeispiel,
- Fig. 2: eine schematische Ansicht eines Teilbereichs des Belüftungs- systems einer Kraftfahrzeug-Klimaanlage gemäß dem zweiten Ausführungsbeispiel,
- Fig. 3: eine schematische Ansicht eines Teilbereichs des Belüftungs- systems einer Kraftfahrzeug-Klimaanlage gemäß dem dritten Ausführungsbeispiel, und
- Fig. 4: eine schematische Ansicht eines Teilbereichs des Belüftungs- systems einer Kraftfahrzeug-Klimaanlage gemäß dem vierten Ausführungsbeispiel.

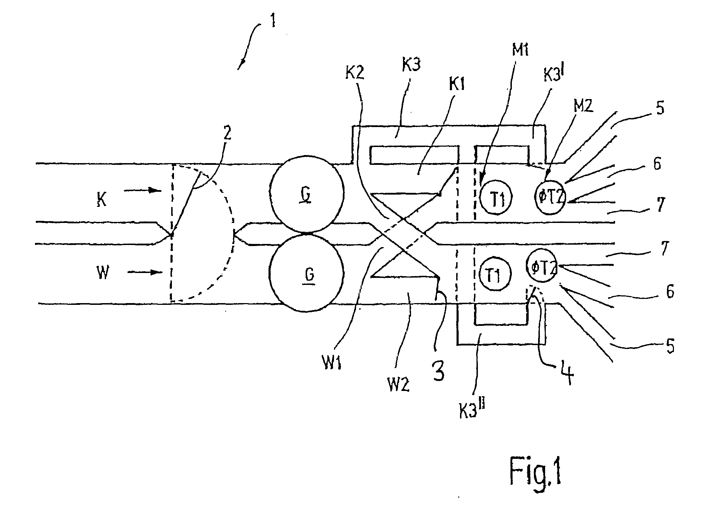

Eine Kraftfahrzeug-Klimaanlage 1 gemäß dem ersten Ausführungsbeispiel weist, wie in Fig. 1 dargestellt, einen Kaltluftkanal K und einen Warmluftkanal W auf. Zwischen den beiden Kanälen K und W ist eine Ausgleichskiappe 2 zum Druckausgleich vorgesehen. Diese kann jedoch gemäß einer nicht in der Zeichnung dargestellten Variante entfallen.

Nachfolgend ist sowohl im Kaltluftkanal K als auch im Warmluftkanal W je ein Gebläse G angeordnet. Die Gebläse G werden jeweils von einem Gebläsemotor (nicht dargestellt) bedarfsgerecht angetrieben und sorgen für die vom Benutzer eingestellte Luftmenge an den Luftausströmern (nicht dargestellt).

In einer alternativen Ausführungsform (nicht dargestellt) kann auch mittels eines Gebläses mit zwei Lüfterrädern und einem Antriebsmotor diese Funktion erfüllt werden. Ein erstes Lüfterrad ist dabei im Kaltluftkanal K und ein zweites Lüfterrad im Warmluftkanal W angeordnet. Die Separierung der beiden Luftströme erfolgt durch die Anordnung einer Trennwand im Gebläsegehäuse zwischen den Lüfterrädern. Diese kann beispielsweise fest mit dem Gehäuse verbunden oder als umlaufende Trennwand mit der Antriebswelle der Lüfterräder verbunden sein. Der Antriebsmotor kann sich je nach zur Verfügung stehendem Bauraum zwischen den Lüfterrädern oder außerhalb dieser befinden.

Nach dem Gebläse G verzweigt sich der jeweilige Luftkanal K bzw. W, wobei sich gemäß dem vorliegenden Ausführungsbeispiel der Warmluftkanal W in zwei Warmluftkanäle W1 und W2 mit einander entsprechender Querschnittsfläche teilt und der Kaltluftkanal K sich in drei Kaltluftkanäle K1, K2 und K3 teilt, wobei K1 und K2 eine einander entsprechende Querschnittfläche aufweisen und der dritte Kaltluftkanal K3 eine etwas kleinere Querschnittfläche aufweist. Dieser dritte Kaltluftkanal K3 verzweigt sich wiederum in zwei mit einander entsprechenden Querschnittflächen aufweisende Kaltluftkanäle K3' und K3".

Auf Grund der für den Fahrer und Beifahrer in Bezug auf die Kanalführung und die Anordnung von Mischbereichen einander entsprechenden Ausbildung der nachfolgenden Bereiche wird im Folgenden nur der Bereich für den Fahrer näher erläutert.

Die Kanäle W1 und K1 führen zu einem ersten Mischbereich M1, wobei das Mischverhältnis der Kalt- und Warmluft mittels einer Klappe 3, im Folgenden auch als erste Mischklappe bezeichnet; geregelt werden kann. Die Luft im ersten Mischbereich M1 weist eine Temperatur T1 auf.

Der erste Mischbereich M1 geht direkt in einen zweiten Mischbereich M2 über, wobei im zweiten Mischbereich M2 der Kaltluftkanal K3' zugeführt wird, geregelt durch eine weitere Klappe 4.

Im Anschluss an den zweiten Mischbereich M2 sind drei mittels nicht dargestellter-Klappen geregelte Ausströmöffnungen 5, 6 und 7 vorgesehen, über welche die temperierte Luft über weitere Luftkanäle den Luftausströmern und somit dem Fahrzeuginnenraum zugeführt wird.

Vorliegend ist die Ausströmöffnung 5 dem Luftausströmer der B-Säule, die Ausströmöffnung 6 der Belüftung und die Ausströmöffnung 7 dem Fußraum zugeordnet. Die Ausströmöffnungen 5 zum Luftausströmer an der B-Säule sind - sowohl fahrer- als auch beifahrerseitig - jeweils in Verlängerung des dem Mischbereich M1 zugeführten Kaltluftkanals K1 bzw. K2 angeordnet, so dass, da in der Regel keine vollständige Vermischung der Kalt- und Warmluft erfolgt, automatisch eine gewisse Schichtung der Luft vorgesehen ist. Zwar erfolgt im zweiten Mischbereich M2 lediglich eine teilweise Mischung der Luft, jedoch wird auf die mittlere Temperatur bei theoretischer vollständiger Mischung der Luft im zweiten Mischbereich M2 als T2 Bezug genommen. Auf Grund der Zumischung von kalter Luft im zweiten Mischbereich M2 liegt die zweite Temperatur T2 unter der ersten Temperatur T1 im ersten Mischbereich M1.

Die Einströmöffnung des Kaltluftkanals K3' liegt seitlich, so dass eine Verstärkung der Schichtung, insbesondere eine unabhängig geregelte Schichtung, der Luft möglich ist, und - auf Grund der Anordnung der Ausströmöffnungen 5, 6 und 7 in Bezug auf die Einströmöffnung des Kaltluftkanals K3' - dem Luftausströmer der B-Säule kältere Luft zugeführt werden kann als dem der Belüftung und insbesondere als dem des Fußraums, wobei jedoch in der Regel die Temperaturen ."Belüftung" und "Fußraum" einander im Wesentlichen entsprechen. Entsprechendes gilt auch für die Beifahrerseite.

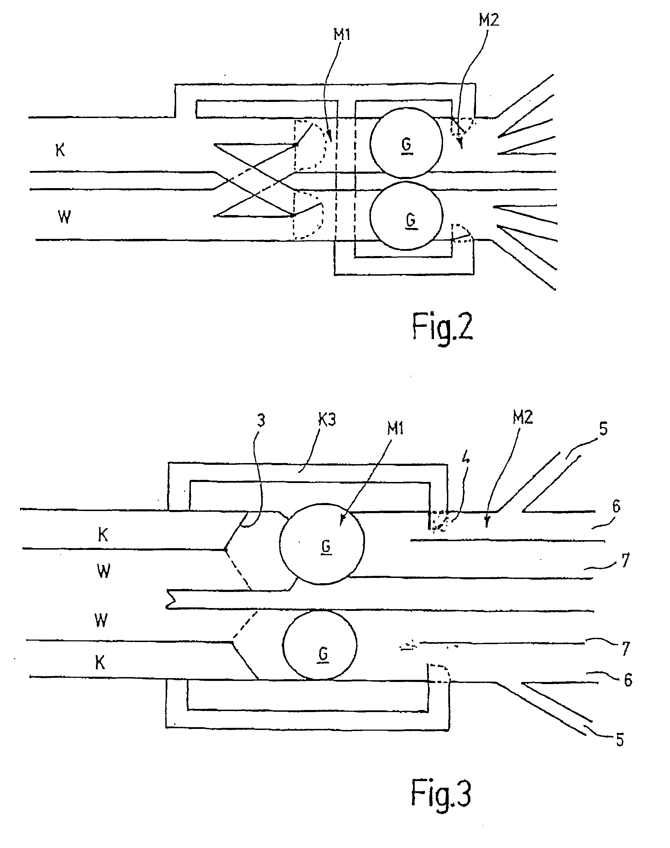

Das in Fig. 2 dargestellte zweite Ausführungsbeispiel entspricht im Wesentlichen dem ersten Ausführungsbeispiel, jedoch sind die Gebläse G zwischen dem ersten und dem zweiten Mischbereich M1 und M2 angeordnet, d.h. es erfolgt in Folge der Zwischenschaltung der Gebläse G, das auf Grund seiner Mischfunktion auch Teil des Mischbereichs M1 ist, keine Vorschichtung der Luft, und die beiden Mischbereiche M1 und M2 sind räumlich voneinander getrennt. Ferner ist im Bypass-Kaltluftkanal vor der Verzweigung desselben ein nicht in der Zeichnung dargestelltes Gebläse angeordnet, so dass das Druckniveau des Kaltluftkanals an der Einströmöffnung zumindest dem im Mischbereich M2 herrschenden Druckniveau entspricht. Alternativ kann auch nach der Verzweigung des Bypasss-Kaltluftkanals in jedem Zweig je ein Gebläse angeordnet sein, so dass eine bedarfsgerechte Kaltluftbeimischung ermöglicht wird.

Gemäß einer Variante sind die Querschnitte derart ausgelegt, dass in Folge hoher Strömungsgeschwindigkeiten an der Einströmöffnung des Bypass-Kaltluftkanals in den zweiten Mischbereich ein Unterdruck herrscht und dadurch bei geöffneter Klappe Kaltluft in den zweiten Mischbereich gelangen kann.

Fig. 3 zeigt ein drittes Ausführungsbeispiel, gemäß dem je ein Kalt- und Warmluftkanal K bzw. W einem von zwei Gebläsen G zugeführt wird. Von jedem der Kaltluftkanäle K zweigt ein Bypass-Kaltluftkanal K3 vor einer Klappe 3 und dem entsprechenden Gebläse G ab. Auf Grund des symmetrischen Aufbaus wird im Folgenden wiederum nur auf eine Seite Bezug genommen. Das Gebläse G und ein kleiner hiernach folgender Bereich dienen als erster Mischbereich M1. Anschließend wird die Luft auf zwei Kanäle verteilt, wobei die Luft über einen Kanal direkt dem Fußraum zugeführt wird (Auslassöffnung 7). Dem zweiten Kanal, der im Bereich zwischen dem ersten Mischbereich M1 und den Auslassöffnungen 5 und 6 den zweiten Mischbereich M2 bildet, wird der Kanal K3 seitlich zugeführt, wobei eine Regelung der Luftzufuhr über eine Klappe 4 erfolgt.

Zum Druckausgleich ist in den Bypass-Kaltluftkanälen K3 entsprechend dem zweiten Ausführungsbeispiel je ein Gebläse (nicht dargestellt). Diese Gebläse können bei einer Ausgestaltung entsprechend der Variante des zweiten Ausführungsbeispiels entfallen.

Auf Grund der Anordnung des Eintritts des Kanals K3 in den zweiten Mischbereich M2 ist entsprechend dem ersten und zweiten Ausführungsbeispiel eine Schichtung der Luft möglich, so dass die dem Fahrzeuginnenraum im Bereich der B-Säule zugeführte Luft bei gewünschter Schichtung kälter als die der Belüftung und insbesondere kälter als die dem Fußraum zugeführte Luft ist. Die Klappen zur Regelung der Auslassöffnungen 5, 6 und 7 sind nicht dargestellt.

Der Aufbau gemäß dem dritten Ausführungsbeispiel ermöglicht eine optimale Luftmengenversorgung in jedem Temperaturbereich.

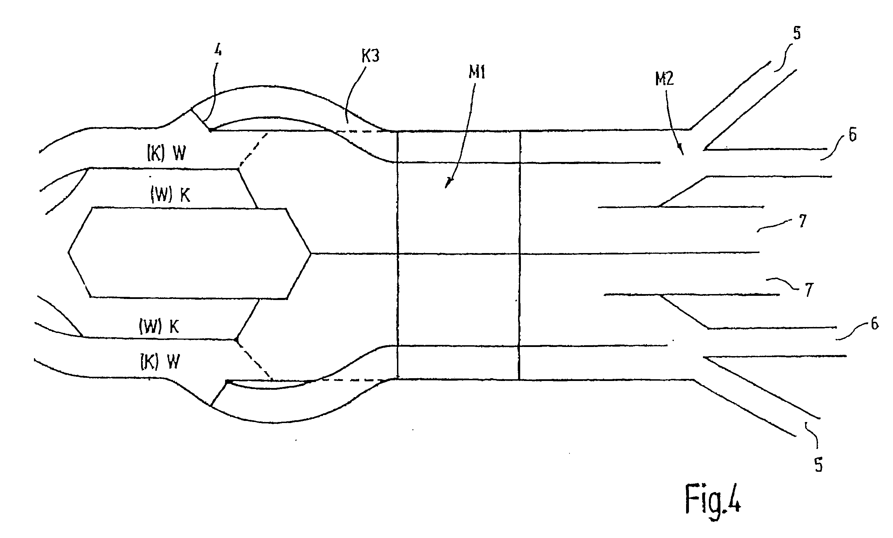

Das in Fig. 4 dargestellte vierte Ausführungsbeispiel entspricht im Wesentlichen dem zuvor beschriebenen dritten Ausführungsbeispiel, jedoch entfallen die Gebläse G, so dass zur näheren Erläuterung auf das dritte Ausführungsbeispiels verwiesen wird. Die Klappe 4 zur Regelung der Luftströmung durch den Kanal K3 ist hierbei an der Einströmöffnung zum Kanal K3 angeordnet. Ferner erfolgt eine zusätzliche Schichtung durch eine in der Tiefe unterschiedliche Ausgestaltung der Kanalverläufe.

Ferner ist in Fig. 4 eine Variante dargestellt, gemäß der die Warm- und Kaltluft gegenüber dem vierten Ausführungsbeispiel vertauscht zugeführt wird.

### Bezugszeichenliste

- 1: Kraftfahrzeug-Klimaanlage
- 2: Ausgleichsklappe
- 3: Klappe
- 4: Klappe
- 5: Ausströmöffnung (B-Säule)
- 6: Ausströmöffnung (Belüftung)
- 7: Ausströmöffnung (Fußraum)

- G: Gebläse
- K, K1, K2, K3, K3', K3": Kaltluftkanal
- M1: erster Mischbereich
- M2: zweiter Mischbereich
- T1, T2: Temperatur
- W, W1, W2: Warmluftkanal

## Patentansprüche

1. Heiz- oder Klimaanlage mit einem Mischbereich (M1) in welchem kalte und warme Luft von einem Kaltluftkanal (K) bzw. einem Warmluftkanal (W) kommend gemischt wird und mindestens einem Gebläse (G), wobei mindestens ein zweiter Mischbereich (M2) vorgesehen ist, welcher dem ersten Mischbereich (M1) in Luftströmungsrichtung gesehen nachfolgend angeordnet ist und dem direkt, den ersten Mischraum (M1) umgehend, über einen Kanal (K3; K3; K3") kalte und/oder warme Luft zugeführt werden kann, **dadurch gekennzeichnet, dass** der erste Mischbereich (M1) vor dem zumindest einem Gebläse (G) angeordnet und/oder durch das Gebläse (G) gebildet ist.

2. Heiz- oder Klimaanlage nach Anspruch 1, **dadurch gekennzeichnet, dass** der Kanal (K3; K3'; K3") vom Kaltluftkanal (K) oder dem Warmluftkanal (W) abzweigt.

3. Heiz- oder Klimaanlage nach Anspruch 1 oder 2, **dadurch gekennzeichnet, dass** der Kanal (K3) vom Kaltluftkanal (K) abzweigt.

4. Heiz- oder Klimaanlage nach einem der vorhergehenden Ansprüche, **dadurch gekennzeichnet, dass** sich der Kanal (K3) in mindestens zwei Kanäle (K3', K3") verzweigt.

5. Heiz- oder Klimaanlage nach einem der vorhergehenden Ansprüche, **dadurch gekennzeichnet, dass** im Kanal (K3) mindestens ein Gebläre (G) angeordnet ist.

6. Heiz- oder Klimaanlage nach einem der vorhergehenden Ansprüche, **dadurch gekennzeichnet, dass** zwischen dem Kaltluftkanal (K) und dem Warmluftkanal (W) eine Ausgleichsklappe (2) angeordnet ist.

7. Heiz- oder Klimaanlage nach Anspruch 6, **dadurch gekennzeichnet, dass** die Ausgleichsklappe (2) vor dem Gebläse (G) angeordnet ist.

8. Heiz- oder Klimaanlage nach einem der vorhergehenden Ansprüche, **dadurch gekennzeichnet, dass** zumindest der zweite Mischbereich (M2) nach dem Gebläse (G) angeordnet ist.

9. Heiz- oder Klimaanlage nach einem der vorhergehenden Ansprüche, **dadurch gekennzeichnet, dass** eine Mehrzahl von Regelvorrichtungen zur Regelung der Luftzufuhr zu den Mischbereichen (M1 und M2) vorgesehen sind.

10. Heiz- oder Klimaanlage nach einem der vorhergehenden Ansprüche, **dadurch gekennzeichnet, dass** mindestens eine Regelvorrichtung zur Regelung der Luftströmung aus dem ersten Mischbereich (M1) zum zweiten Mischbereichen (M2) vorgesehen ist.

11. Heiz- oder Klimaanlage nach einem der vorhergehenden Ansprüche, **dadurch gekennzeichnet, dass** mindestens eine Regelvorrichtung zur Regelung der Luftströmung aus dem zweiten Mischbereichen (M2) vorgesehen ist.

## Claims

1. A heater or air-conditioning system having a mixing zone (M1) in which cold and warm air respectively coming from a cold air duct (K) or a warm air duct (W) are mixed and at least one blower (G), wherein at least a second mixing zone (M2) is provided, which is arranged downstream of the first mixing zone (M1) viewed in the direction of the air stream and to which cold and/or warm air can be fed directly, bypassing the first mixing zone (M1), via a duct (K3; K3' ; K3"), **characterized in that** the first mixing zone (M1) is arranged in front of the at least one blower (G) and/or is formed by the blower (G).

2. The heater or air-conditioning system as claimed in claim 1, **characterized in that** the duct (K3; K3'; K3") branches off from the cold air duct (K) or the warm air duct (W).

3. The heater or air-conditioning system as claimed in claim 1 or 2, **characterized in that** the duct (K3) branches off from the cold air duct (K).

4. The heater or air-conditioning system as claimed in one of the preceding claims, **characterized in that** the duct (K3) branches into at least two ducts (K3', K3") .

5. The heater or air-conditioning system as claimed in one of the preceding claim, **characterized in that** at least one blower (G) is arranged in the duct (K3).

6. The heater or air-conditioning system as claimed in one of the preceding claims, **characterized in that** an equalizer flap (2) is arranged between the cold air duct (K) and the warm air duct (W).

7. The heater or air-conditioning system as claimed in claim 6, **characterized in that** the equalizer flap (2) is arranged upstream of the blower (G).

8. The heater or air-conditioning system as claimed in one of the preceding claims, **characterized in that** at least the second mixing zone (M2) is arranged downstream of the blower (G).

9. The heater or air-conditioning system as claimed in one of the preceding claims, **characterized in that** a multiplicity of regulating devices are provided for regulating the air supply to the mixing zones (M7, and M2).

10. The heater or air-conditioning system as claimed in one of the preceding claims, **characterized in that** at least one regulating device is provided for regulating the airflow from the first mixing zone (M1) to the second mixing zone (M2).

11. The heater or air-conditioning system as claimed in one of the preceding claims, **characterized in that** at least one regulating device is provided for regulating the airflow from the second mixing zone (M2).

## Revendications

1. Système de chauffage ou de climatisation comprenant une zone de mélange (M1) dans laquelle est mélangé de l'air froid et chaud venant d'un conduit d'air froid (K) ou d'un conduit d'air chaud (W), et au moins une soufflante (G), où il est prévu au moins une deuxième zone de mélange (M2) qui est disposée, vue dans la direction d'écoulement de l'air, en aval de la première zone de mélange (M1), deuxième zone de mélange à laquelle peut être fourni, directement, de l'air froid et / ou chaud, via un conduit (K3 ; K3' ; K3") contournant la première zone de mélange (M1),
**caractérisé en ce que** la première zone de mélange (M1)
est disposée en amont de la soufflante (G) au moins au nombre de un, et / ou formée par la soufflante (G).

2. Système de chauffage ou de climatisation selon la revendication 1, **caractérisé en ce que** le conduit (K3 ; K3' ; K3") bifurque à partir du conduit d'air froid (K) ou du conduit d'air chaud (W).

3. Système de chauffage ou de climatisation selon la revendication 1 ou 2, **caractérisé en ce que** le conduit (K3) bifurque à partir du conduit d'air froid (K).

4. Système de chauffage ou de climatisation selon l'une quelconque des revendications précédentes, **caractérisé en ce que** le conduit (K3) se ramifie en au moins deux conduits (K3', K3").

5. Système de chauffage ou de climatisation selon l'une quelconque des revendications précédentes, **caractérisé en ce qu'**au moins une soufflante (G) est disposée dans le conduit (K3).

6. Système de chauffage ou de climatisation selon l'une quelconque des revendications précédentes, **caractérisé en ce qu'**un volet d'équilibrage (2) est disposé entre le conduit d'air froid (K) et le conduit d'air chaud (W).

7. Système de chauffage ou de climatisation selon la revendication 6, **caractérisé en ce que** le volet d'équilibrage (2) est disposé en amont de la soufflante (G).

8. Système de chauffage ou de climatisation selon l'une quelconque des revendications précédentes, **caractérisé en ce qu'**au moins la deuxième zone de mélange (M2) est disposée en aval de la soufflante (G).

9. Système de chauffage ou de climatisation selon l'une quelconque des revendications précédentes, **caractérisé en ce qu'**il est prévu une pluralité de dispositifs de régulation servant à la régulation de l'alimentation d'air aux zones de mélange (M1 et M2).

10. Système de chauffage ou de climatisation selon l'une quelconque des revendications précédentes, **caractérisé en ce qu'**il est prévu au moins un dispositif de régulation servant à la régulation de l'écoulement de l'air sortant de la première zone de mélange (M1) et allant vers la deuxième zone de mélange (M2).

11. Système de chauffage ou de climatisation selon l'une quelconque des revendications précédentes, **caractérisé en ce qu'**il est prévu au moins un dispositif de régulation servant à la régulation de l'écoulement de l'air sortant de la deuxième zone de mélange (M2).
